# EUROPÄISCHE PATENTSCHRIFT

(11) **EP 0 423 382 B1**
(45) Veröffentlichungstag und Bekanntmachung des Hinweises auf die Patenterteilung: **27.07.1994**
(21) Anmeldenummer: 89119177.7
(22) Anmeldetag: 16.10.1989
(51) Int. Cl.: G21C 3/14

(54) **Kernreaktorbrennelement**
Nuclear-fuel assembly
Assemblage de combustible nucléaire

(43) Veröffentlichungstag der Anmeldung: 24.04.1991
(73) Patentinhaber: SIEMENS AKTIENGESELLSCHAFT, 80333 München (DE)
(72) Erfinder: Lettau, Hans, Dipl.-Ing. (FH), D-8521 Effeltrich (DE); Lippert, Hans-Joachim, D-8552 Höchstadt (DE); Kratzer, Anton, Dipl.-Ing. (FH), D-8551 Kunreuth (DE)

(56) Entgegenhaltungen:
- EP-A- 0 182 196
- US-A- 4 764 340
- US-A- 4 767 595

## Beschreibung

Die Erfindung betrifft ein Kernreaktorbrennelement entsprechend dem Gattungsbegriff des Patentanspruches 1.

Ein derartiges Kernreaktorbrennelement ist aus der deutschen Offenlegungsschrift 38 16 277 bekannt. Sein Brennelementkasten hat quadratischen Querschnitt. Es bildet in einem Siedewasserkernreaktor zusammen mit drei weiteren Kernreaktorbrennelementen, deren Brennelementkästen den gleichen quadratischen Querschnitt haben, eine Gruppe von vier vertikal angeordneten Kernreaktorbrennelementen. Die Oberenden der Brennelementkästen sind in einer quadratischen Masche des oberen Kerngitters im Siedewasserkernreaktor zusammengefaßt. Jedes Kernreaktorbrennelement befindet sich in einer Ecke dieser quadratischen Masche, und sein Brennelementkasten liegt mit dem vorstehenden Anlagekörper, den er an jeder seiner benachbarten zweiten Außenseiten aufweist, an zwei Seiten dieser quadratischen Masche an diesem oberen Kerngitter an.

Die federnden Klammerteile an der Ecke des Brennelementkastens eines jeden dieser vier Kernreaktorbrennelemente befinden sich im Zentrum der Masche des oberen Kerngitters. Dort gewährleisten sie, daß sich zwischen den Brennelementkästen der vier Kernreaktorbrennelemente ein spaltförmiger Zwischenraum mit kreuzförmigem Querschnitt bildet. In diesem Zwischenraum ist im Siedewasserkernreaktor ein langgestreckter Steuerstab mit ebenfalls kreuzförmigem Querschnitt in vertikaler Richtung verschiebbar angeordnet.

Die Paßkörper an den Brennelementfüßen der vier Kernreaktorbrennelemente sind in dem Siedewasserkernreaktor in der Paßöffnung der unteren Kerngitterplatte lose, aber zentriert abgestützt. Da die Mittelachse der ringförmigen Paßfläche der Paßkörper Abstand von der Brennelementmittelachse hat, ist gewährleistet, daß die Brennelementmittelachsen der vier Kernreaktorbrennelemente in der Masche des in dem Siedewasserkernrekator bereits vorgegebenen oberen Kerngitters trotz der beiden Anlagekörper an den beiden benachbarten zweiten Außenseiten der Brennelementkästen zueinander parallel und vertikal sind. Deshalb verklemmt der langgestreckte Steuerstab mit kreuzförmigem Querschnitt nicht, wenn er beispielsweise von unten in den Zwischenraum mit kreuzförmigem Querschnitt zwischen den vier Kernreaktorbrennelementen eingefahren wird.

Mit den beiden Anlagekörpern kann in Abhängigkeit von deren Höhe sowohl die Dicke des Spaltes zwischen den Brennelementkästen der vier in einer Masche des oberen Kerngitters angeordneten Kernreaktorbrennelemente als auch die Dicke des Spaltes zwischen diesen Brennelementkästen und den Brennelementkästen von jeweils zwei Kernreaktorbrennelementen beeinflußt werden, die sich in den benachbarten Maschen des vorgegebenen oberen Kerngitters befinden. Insbesondere in einer sogenannten D-Gitter-Kernreaktorbrennelementanordnung, in der der Spalt zwischen den Brennelementkästen von vier in einer Kerngittermasche angeordneten Kernreaktorbrennelementen an sich eine größere Dicke hat als der Spalt zwischen diesen Brennelementkästen und den Brennelementkästen der Kernreaktorbrennelemente in der benachbarten Maschen des oberen Kerngitters, kann mit Hilfe der beiden Anlagekörper und aufgrund der bezüglich der Brennelementmittelachse versetzten Mittelachse der ringförmigen Paßfläche des Paßkörpers nachträglich bei unverändertem oberen Kerngitter und unveränderter unterer Kerngitterplatte in einem vorgegebenen Reaktor eine sogenannte C-Gitter-Kernreaktorbrennelementanordnung erzielt werden. In dieser C-Gitter-Kernreaktorbrennelementanordnung haben zur verbesserten Ausnutzung des Kernbrennstoffes die Spalte zwischen den Brennelementkästen von vier in der gleichen Masche des Kerngitters angeordneten Kernreaktorbrennelementen und die Spalte, die die Brennelementkästen dieser Kernreaktorbrennelemente mit den Brennelementkästen in den vier benachbarten Maschen des oberen Kerngitters bilden, die gleiche oder etwa die gleiche Dicke.

Der Erfindung liegt die Aufgabe zugrunde, das nachträgliche Anbringen der Anlagekörper am Oberende des Brennelementkastens dieser Kernreaktorbrennelemente zu erleichtern.

Zur Lösung dieser Aufgabe hat ein Kernreaktorbrennelement der eingangs erwähnten Art erfindungsgemäß die Merkmale des kennzeichnenden Teiles des Patentanspruches 1.

Das Klammerteil dieses Kernreaktorbrennelementes wird beim Festschrauben des Oberendes des Brennelementkastens an der Kopfplatte des Kernreaktorbrennelementes in der Ecke des Brennelementkasten mit festgeschraubt, so daß sich auch ein von diesem Klammerteil gebildeter Anlagekörper sofort an der richtigen Stelle auf der Außenseite des Brennelementkastens befindet. Trotzdem kann dieser Brennelementkasten vor dem Anbringen des Klammerteiles beliebig um seine Längsachse gedreht werden.

Die Erfindung und ihre Vorteile seien anhand der Zeichnung an Ausführungsbeispielen näher erläutert:
FIG 1 zeigt in perspektivischer Ansicht eine Masche eines oberen Kerngitters in einem Siedewasserkernreaktor.
FIG 2 zeigt im Längsschnitt entsprechend der strichpunktierten Linie II-II in FIG 3 die Unterenden von zwei in der Masche nach FIG 1 angeordneten Kernreaktorbrennelementen.
FIG 3 zeigt in Draufsicht einen in FIG 2 erkennbaren Gußkörper.
FIG 4a und 4b zeigen in perspektivischer Ansicht ein als Winkelteil ausgebildetes Klammerteil für eine Ecke am Oberende eines Brennelementkastens eines in die Masche des oberen Kerngitters nach FIG 1 einsetzbares Kernreaktorbrennelementes.
FIG 5a und 5b zeigen in perspektivischer Ansicht ein weiteres als Winkelteil ausgebildetes Klammerteil für eine Ecke am Oberende eines Brennelementkasten für ein in die Masche des oberen Kerngitters nach FIG 1 einsetzbares Kernreaktorbrennelement.

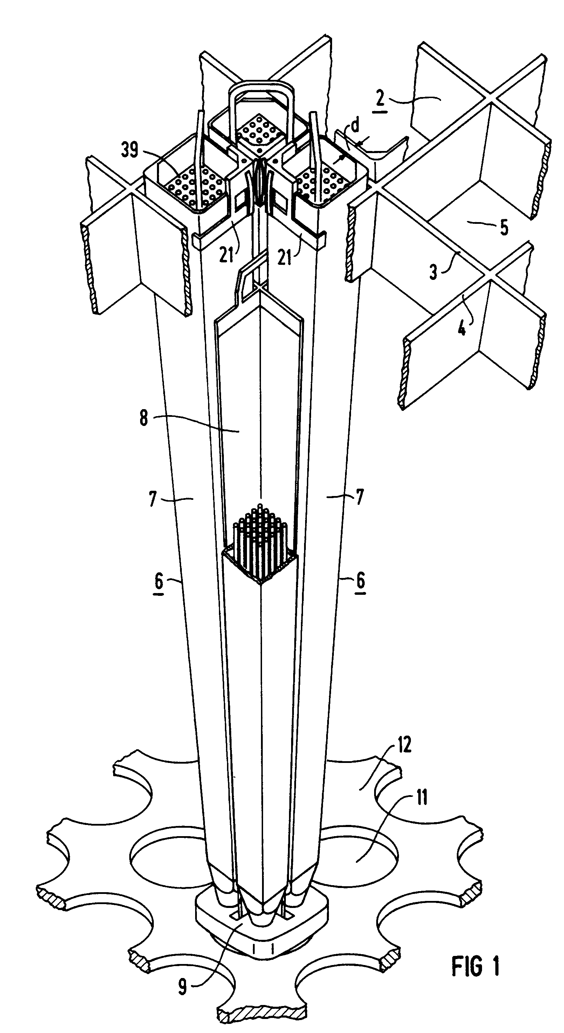

Das in FIG 1 dargestellte obere Kerngitter 2 setzt sich aus hochkant angeordneten, sich rechtwinklig durchsetzenden Stegen 3 und 4 zusammen, die quadratische Maschen 5 bilden. Dieses obere Kerngitter 2 ist horizontal im Kern eines Siedewasserkernreaktors angeordnet.

Eine Masche 5 des oberen Kerngitters 2 umschließt jeweils vier vertikal angeordnete Kernreaktorbrennelemente 6, von denen jedes einen gleich ausgebildeten langgestreckten Brennelementkasten 7 mit quadratischem Querschnitt aufweist, der mit Kernbrennstoff gefüllte Brennstäbe, eine Kopfplatte 39 und eine Fußplatte 13 umhüllt. Jedes der Kernreaktorbrennelemente 6 ist in einer Ecke der Masche 5 angeordnet, so daß die Brennelementkästen 7 dieser Kernreaktorbrennelemente 6 einen spaltförmigen Zwischenraum mit kreuzförmigem Querschnitt bilden, in dem ein langgestreckter Steuerstab 8 mit ebenfalls kreuzförmigem Querschnitt in vertikaler Richtung verschiebbar angeordnet ist.

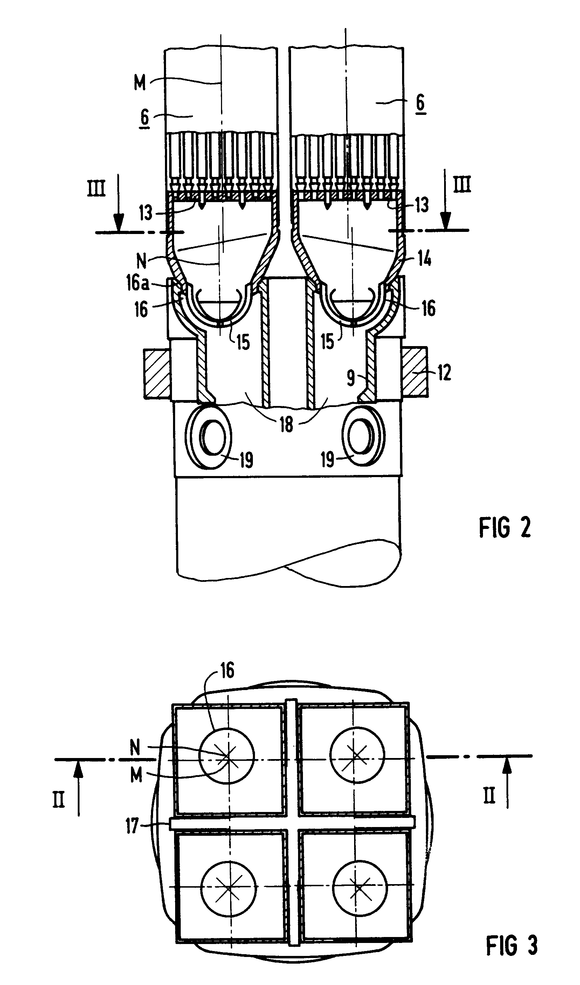

Die unteren Enden der vier Kernreaktorbrennelemente 6 ruhen auf einem in FIG 2 dargestellten Stützkörper 9. Dieser Stützkörper 9 ist ein Gußkörper aus Stahl und befindet sich im Oberende eines vertikal angeordneten Steuerstabführungsrohres, das mit seinem Oberende eine Durchführung 11 in einer in FIG 1 erkennbaren unteren Kerngitterplatte 12 durchgreift.

Diese untere Kerngitterplatte 12 ist im Siedewasserkernreaktor vertikal unterhalb des oberen Kerngitters 2 angeordnet und parallel zu diesem oberen Kerngitter 2. Die Führungsrohre sind der besseren Übersicht halber in FIG 1 nicht dargestellt.

Wie FIG 2 ferner zeigt, bilden die Kernreaktorbrennelemente 6 unten an ihrer Fußplatte 13 als Paßkörper einen hohlen Kegelstumpf 14 mit nach unten aufgesetzter Kalotte 15. Jedes der Kernreaktorbrennelemente 6 greift mit dem hohlen Kegelstumpf 14 in eine kreisrunde Paßöffnung 16 in der Oberseite des Stützteiles 9 lose, aber zentriert. Eine Paßöffnung 16 ist in Draufsicht in FIG 3 zu erkennen. Das Stützteil 9 hat zwischen den vier Paßöffnungen 16 eine Durchtrittsöffnung 17 mit kreuzförmigem Querschnitt für den Steuerstab 8. Ferner befinden sich im Stützteil 9 an den Öffnungen 16 Kanäle 18, die durchgehend sind vom Unterende des Stützteiles 9 bis zu dessen Oberende. Auch die Kalotten 15 weisen breite Durchtrittsspalte auf, und im Mantel des Steuerstabführungsrohres sind mit Blenden versehene Seitenöffnungen 19 vorgesehen. Im Siedewasserkernreaktor kann also Wasser aus dem Steuerstabführungsrohr und durch die Seitenöffnungen 19 hindurch in die Kanäle 18 des Stützteiles 9 aufsteigen und durch die Durchtrittsspalte in den Kalotten 15 und die hohlen Kegelstümpfe 14 sowie durch Durchführungen in den Fußplatten 13 der Kernreaktorbrennelemente 6 hindurch in die Kernreaktorbrennelemente 6 gelangen und diese von unten nach oben durchfließen. Zugleich sind diese Kernreaktorbrennelemente 6 in den Paßöffnungen 16 des Stützteiles 9 quer zur Brennelementmittelachse dieser Kernreaktorbrennelemente 6 schwenkbar lose abgestützt und zentriert.

Die Mittelachse N der kreisrunden Paßfläche 16a des hohlen Kegelstumpfes 14 eines jeden der vier Kernreaktorbrennelemente 6 in der zugehörigen Paßöffnung 16 ist parallel zur Brennelementmittelachse M des betreffenden Kernreaktorbrennelementes 6 und ist - wie FIG 3 zeigt - unter Bildung eines Abstandes zur Brennelementmittelachse M, der für alle vier Kernreaktorbrennelemente 6 gleich sein kann, in bezug auf diese Brennelementmittelachse M in Richtung einer Diagonalen der Masche 5 des oberen Kerngitters 2 zu einer Ecke dieser Masche 5 hin versetzt.

Am Oberende der Kernreaktorbrennelemente 6 befinden sich jeweils zwei benachbarte Seiten der Brennelementkästen 7 jedes der vier Kernreaktorbrennelemente 6 innerhalb der Masche des oberen Kerngitters 2 gegenüber einem Steg 3 und 4 des oberen Kerngitters 2. An den beiden anderen Seiten der Brennelementkästen 7 liegt außen jeweils ein Winkelteil 21 als Klammerteil an. Dieses ist an einem Quersteg 22 des betreffenden Brennelementkastens 7 außen an der Ecke des Brennelementkastens 7 festgeschraubt, die sich im Zentrum der Masche 5 des oberen Kerngitters 2 befindet.

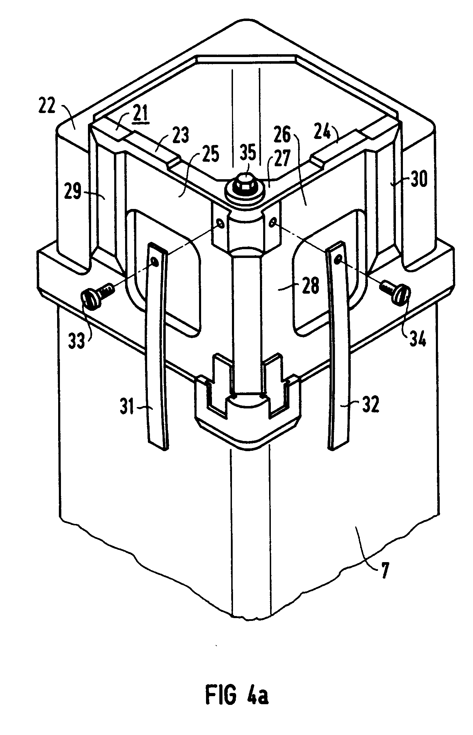

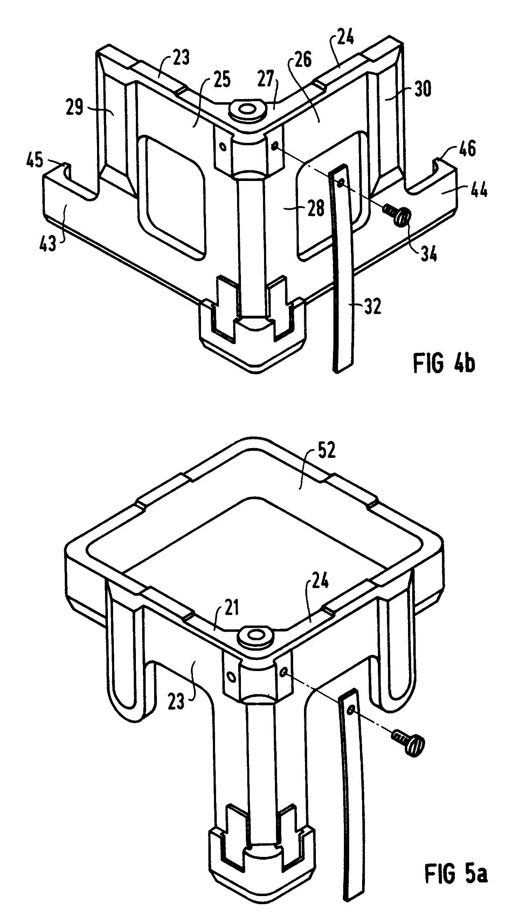

Ein solches Winkelteil 21 ist in FIG 4a und 4b deutlicher erkennbar. Es weist als zwei Teilkörper zwei zueinander rechtwinklige, gleichlange Schenkel 23 und 24 auf. An der gleichen Seite dieser Schenkel 23 und 24 befinden sich Wandungen 25 und 26, die in einem Scheitelsteg 27 der Schenkel 23 und 24 zueinander und zum Scheitelsteg 27 rechtwinklig sind. Die Wandungen 25 und 26 bilden im Scheitelsteg 27 ein zu den Schenkeln 23 und 24 rechtwinkliges langgestrecktes L-Profil 28, während sie an den Enden der Schenkel 23 und 24 jeweils zu einem starren, sich nach außen erhebenden Anlagennoppen 29 und 30 ausgeformt sind.

Außen am L-förmigen Profil 28 ist auf beiden Wandungen 25 und 26 je eine langgestreckte Blattfeder 31 und 32 in Richtung des L-Profils 28 angeordnet und jeweils an einem Ende mit einer Schraube 33 und 34 am Winkelteil 21 so befestigt, daß sie sich nach außen von der Außenseite des L-Profils 28 wegwölbt. Mit einem Schraubbolzen 35 ist das Winkelteil derart an einem Quersteg 22 des Brennelementkastens 7 festgeschraubt, daß die Wandungen 25 und 26 mit ihren Innenseiten flächig außen an zwei benachbarten Seiten des betreffenden Brennelementkastens 7 in der Masche des oberen Kerngitters 2 nach FIG 1 anliegen.

An den Schenkein 23 und 24 des Winkelteiles 21 sind jeweils Arme 43 und 44 vorgesehen die die beiden benachbarten Seiten des Brennelementkastens 7, an denen die Schenkel 23 bzw. 24 anliegen, übergreifen und die anderen beiden Seiten des Brennelementkastens 7 hintergreifen. Über diesen beiden hintergriffenen Seiten bilden sie jeweils einen Anlagekörper 45 bzw. 46. Beide Anlagekörper 45 und 46 können z.B. gleich hoch über der betreffenden Seite des Brennelementkastens 7 sein.

Die Blattfedern 31 bzw. 32 an zwei sich gegenüberliegenden Seiten oer Brennelementkästen 7 von jeweils zwei Kernreaktorbrennelementen 6 in einer Masche 5 des oberen Kerngitters 2 nach FIG 1 liegen unter Vorspannung aneinander und jeder der Anlagekörper 45 und 46 dieser Brennelementkästen 7 an einem Steg 3 oder 4 des oberen Kerngitters 2 an. Die zu den Brennelementmittelachsen M der Brennelemente 6 versetzten Mittelachsen N der ringförmigen Paßflächen 16a der hohlen Kegelstümpfe 14 bewirken, daß die Blattfedern 31 bzw. 32 der Winkelteile 21 im Zentrum der Masche des oberen Kerngitters 2 die vier Kernreaktorbrennelemente 6 in dieser Masche trotzdem mit genau vertikal angeordneter Brennelementmittelachse M fixieren. Deshalb hat auch der für den Steuerstab 8 bestimmte - verengte - Zwischenraum zwischen den Brennelementkästen 7 dieser vier Kernreaktorbrennelementen 6 eine genau vertikale Längsachse. Der Steuerstab 8 kann daher in diesem Zwischenraum nicht verklemmen.

Zugleich ist aber auch die Dicke d des Spaltes zwischen den Brennelementkästen 7 von jeweils zwei Kernreaktorbrennelementen 6, die in zwei beanchbarten Maschen 5 des oberen Kerngitters 2 angeordnet sind und sich paarweise gegenüberstehen, vergrößert. Eine Veränderung am oberen Kerngitter 2 und an der Kerngitterplatte 12, die beide fest im Siedewasserreaktor eingebaut sind, ist zu dieser Vergrößerung nicht erforderlich.

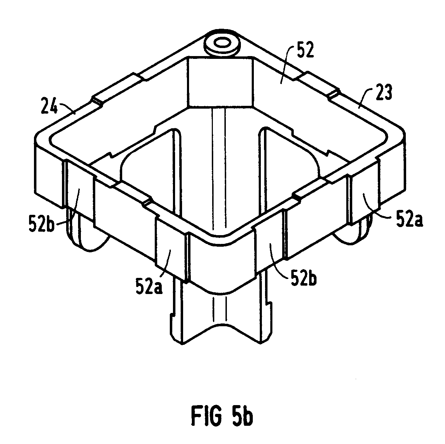

Nach FIG 5a und 5b, in denen gleiche Teile gleiche Bezugszeichen haben wie in den Figuren 4a und 4b; bilden die Schenkel 23 und 24 eines weiteren Winkelteiles 21 als Anlagekörper einen quadratischen Rahmen 52, der den Brennelementkasten am Oberende umschließt. Dieser Rahmen 52 liegt an den vier Außenseiten des Brennelementkastens an.

Die Anlagekörper, insbesondere der mit dem Rahmen 52 nach FIG 5a und 5b gebildete, an Brennelementkästen von vier in einer Masche 5 des oberen Kerngitters 2 angeordneten Kernreaktorbrennelementen können auch die Stege 3 und 4 des oberen Kerngitters 2 nach FIG 1 über- und untergreifen und direkt an Brennelementkästen oder an Anlagekörpern von Brennelementkästen anliegen, die zu Kernreaktorbrennelementen in benachbarten Maschen des oberen Kerngitters 2 gehören und gegebenenfalls die Stege 3 und 4 auch über- bzw. untergreifen.

Günstigerweise weist der Rahmen 52, wie FIG 5b zeigt, an seinen Außenseiten sich in Richtung der Brennelementmittelachse erstreckende Rastvorsprünge 52a und mindestens am Unterende offene Rastrinnen 52b auf, die in die Rastrinnen bzw. in die Rastvorsprünge von Rahmen der Winkelteile an den Kernreaktorbrennelementen in den benachbarten Maschen des oberen Kerngitters 2 einrasten können.

## Patentansprüche

1. Kernreaktorbrennelement mit langgestreckten, zu einer Brennelementmittelachse parallelen Brennstäben, die Kernbrennstoff enthalten und von denen zumindest ein Teil in Durchführungen in einer Kopf- und in einer Fußplatte geführt und befestigt ist,
mit einem langgestreckten Brennelementkasten, der einen rechteckigen, insbesondere quadratischen Querschnitt hat, der die Kopf- und Fußplatte mit den Brennstäben umschließt und der mit einem Oberende an der Kopfplatte befestigt ist,
mit einem federnden Klammerteil, das am Oberende des Brennelementkastens an einer Ecke zwischen zwei ersten benachbarten Außenseiten des Brennelementkastens angebracht ist,
mit einem vorstehenden Anlagekörper am Oberende des Brennelementkastens, der einer von dessen beiden benachbarten zweiten Außenseiten zugeordnet ist, und
mit einem am Brennelementfuß ausgebildeten Paßkörper, der zum Eingreifen in eine an einer unteren Kerngitterplatte eines Kernreaktors ausgebildete Paßöffnung bestimmt ist und eine ringförmige Paßfläche mit einer zur Brennelementmittelachse parallelen Mittelachse zwischen der Brennelementmittelachse und der Kante zwischen den beiden benachbarten zweiten Außenseiten des Brennelementkastens hat,
**dadurch gekennzeichnet,**
daß das federnde Klammerteil durch zwei Teilkörper (23; 24) gebildet ist, von denen jeder an einer der beiden ersten benachbarten Außenseiten des Brennelementkastens (7) anliegt, von denen mindestens einer außen mit einer Anlagefeder versehen ist und von denen mindestens einer unter Bildung des Anlagekörpers die eine der beiden zweiten benachbarten Außenseiten des Brennelementkastens (7) überragt.

2. Kernreaktorbrennelement nach Anspruch 1,
**dadurch gekennzeichnet,**
daß der Anlagekörper die eine der beiden zweiten benachbarten Außenseiten des Brennelementkastens (7) übergreift.

3. Kernreaktorbrennelement nach Anspruch 1,
**dadurch gekennzeichnet,**
daß das Klammerteil den Anlagekörper an einem rechteckigen, vorzugsweise quadratischen Rahmen (52) bildet.

4. Kernreaktorbrennelement nach Anspruch 3,
**dadurch gekennzeichnet,**
daß die Außenseiten des Rahmens (52) an den zweiten benachbarten Außenseiten des Brennelementkastens mit einem Rastvorsprung (52a) und einer Rastrinne (52b) versehen sind, die sich in Richtung der Brennelementmittelachse erstrecken.

## Claims

1. Nuclear reactor fuel element with extended fuel rods parallel to a fuel-element centre axis, which fuel rods contain nuclear fuel and of which at least a part is guided in bushings in a head plate and in a foot plate and is fastened,
having an extended fuel-element box, which has a rectangular, in particular square, cross section, which encloses the head plate and foot plate with the fuel rods and which is fastened by an upper end to the head plate,
having a resilient clamp part which is fitted at the upper end of the fuel-element box to a corner between two first adjacent outer sides of the fuel-element box, having a projecting bearing body at the upper end of the fuel-element box, which is associated with one of its two adjacent second outer sides, and
having a fitting body constructed at the foot of the fuel element, which body is intended for engagement into a fitting opening constructed at a lower nuclear grid plate of a nuclear reactor and has an annular fitting surface with a centre axis parallel to the fuel-element centre axis between the fuel-element centre axis and the edge between the two adjacent second outer sides of the fuel-element box,
characterized in that the resilient clamp part is formed by two partial bodies (23; 24), each of which abuts one of the two first adjacent outer sides of the fuel-element box (7), of which at least one is provided on the outside with a bearing spring and of which at least one projects above one of the two second adjacent outer sides of the fuel-element box (7) with the formation of the bearing body.

2. Nuclear reactor fuel element according to claim 1, characterized in that the bearing body engages over one of the two second adjacent outer sides of the fuel-element box (7).

3. Nuclear reactor fuel element according to claim 1, characterized in that the clamp part forms the bearing body at a rectangular, preferably square, frame (52).

4. Nuclear reactor fuel element according to claim 3, characterized in that the outer sides of the frame (52) at the second adjacent outer sides of the fuel-element box are provided with a catch projection (52a) and a catch groove (52b) which extend in the direction of the fuel-element centre axis.

## Revendications

1. Assemblage combustible de réacteur nucléaire, comportant des crayons combustibles oblongs parallèles à un axe médian de l'assemblage combustible, qui contiennent du combustible nucléaire, dont une partie au moins est guidée et fixée dans des passages d'une plaque de tête et d'embase,
un caisson d'assemblage combustible oblong, qui est de section transversale rectangulaire, plus particulièrement carrée, qui entoure la plaque de tête et d'embase avec les crayons combustibles et qui est fixé à la plaque de tête par une extrémité supérieure,
une partie élastique à crampons qui est fixée à l'extrémité supérieure du caisson de l'assemblage combustible en un sommet entre deux premiers côtés extérieurs voisins du caisson de l'assemblage combustible,
une pièce d'appui qui fait saillie à l'extrémité supérieure du caisson de l'assemblage combustible et qui est associée à l'un des deux seconds côtés extérieurs voisins de ce dernier, et
une pièce d'ajustage qui est formée sur l'embase de l'assemblage combustible, qui est destinée à pénétrer dans une ouverture d'ajustage pratiquée dans une plaque grillagée nucléaire inférieure d'un réacteur nucléaire, et qui, entre l'axe médian de l'assemblage combustible et le bord situé entre les deux seconds côtés extérieurs voisins du caisson de l'assemblage combustible, comporte une surface d'ajustage annulaire dont l'axe médian est parallèle à l'axe médian de l'assemblage combustible,
caractérisé en ce que la partie élastique à crampons est formée de deux pièces (23 ; 24) qui s'appliquent chacune sur l'un des premiers côtés extérieurs voisins du caisson (7) de l'assemblage combustible, dont l'une au moins est pourvue extérieurement d'un ressort d'appui, et dont l'unr au moins, en formant la pièce d'appui, dépasse de l'un des seconds côtés extérieurs voisins du caisson (7) de l'assemblage combustible.

2. Assemblage combustible de réacteur nucléaire selon la revendication 1, caractérisé en ce que la pièce d'appui chevauche l'un des seconds côtés extérieurs voisins du caisson (7) de l'assemblage combustible.

3. Assemblage combustible de réacteur nucléaire selon la revendication 1, caractérisé en ce que la partie à crampons forme la pièce d'appui sur un cadre (52) rectangulaire, de préférence carré.

4. Assemblage combustible de réacteur nucléaire selon la revendication 3, caractérisé en ce que sur les seconds côtés extérieurs voisins du caisson de l'assemblage combustible, les côtés extérieurs du cadre (52) sont pourvus d'une saillie d'encliquetage (52a) et d'une rainure d'encliquetage (52b), qui s'étendent dans la direction de l'axe médian de l'assemblage combustible.
